# EUROPEAN PATENT SPECIFICATION

(11) **EP 3 477 096 B1**
(45) Date of publication and mention of the grant of the patent: **06.10.2021**
(21) Application number: 18203260.7
(22) Date of filing: 30.10.2018
(51) Int. Cl.: F03D 1/02, F03D 7/02, F03D 80/40

(54) **WIND POWER GENERATOR, AND CONTROL METHOD FOR WIND POWER GENERATOR**
WINDKRAFTGENERATOR UND STEUERUNGSVERFAHREN FÜR WINDKRAFTGENERATOR
GÉNÉRATEUR D'ÉNERGIE ÉOLIENNE ET PROCÉDÉ DE COMMANDE POUR GÉNÉRATEUR D'ÉNERGIE ÉOLIENNE

(30) Priority: 30.10.2017 JP 2017209852
(43) Date of publication of application: 01.05.2019
(73) Proprietor: Mitsubishi Heavy Industries, Ltd., Tokyo 108-8215 (JP)
(72) Inventor: HACHIYA, Naoko, Tokyo 108-8215 (JP)
(74) Representative: Cabinet Beau de Loménie

(56) References cited:
- WO-A1-2016/128002
- WO-A1-2016/128005
- US-A1- 2012 055 247

## Description

### BACKGROUND OF THE INVENTION

### 1. FIELD OF THE INVENTION

The present invention relates to a wind turbine generator and a control method for the wind turbine generator.

### 2. DESCRIPTION OF RELATED ART

Wind turbine generators each including just one wind turbine part installed per tower part (single rotor type) are spread broadly. Meanwhile, a wind turbine generator including a plurality of wind turbine parts installed per tower part, a so-called multirotor wind turbine generator, is also known. Adopting the multirotor type enables an increase in total power generation (output power capacitance) of the wind turbine generator without increasing the size of the wind turbine part.

The PCT International Publication No. WO 2016/128005 (hereinafter referred to as No. WO 2016/128005) below discloses a technique to solve a problem at a high wind speed which is peculiar to the multirotor wind turbine generator. Specifically, No. WO 2016/128005 discloses a technique of arranging pairs of wind turbine parts provided on multi-levels such that the respective yaw angles of the pairs of wind turbine parts are evenly spaced in order to disperse a moment that acts on a base of a tower part at a high wind speed. The PCT International Publication No. WO 2016/128002 discloses a control system having local and central controllers for wind turbine system having multiple rotors, wherein the wind turbines are shut-down when ice build-up on blades is detected.

### {PTL 1}

WO 2016/128005

### BRIEF SUMMARY OF THE INVENTION

The problems due to the configuration peculiar to the multirotor wind turbine generator include not only the moment concentration in the tower part at a high wind speed, but also other problems. One of those is a problem due to icing in a cold environment.

With decrease in outside air temperature, supercooled water droplets or moisture in the air collide with blades and the like in the wind turbine part to cause freezing, and icing thus occurs on the blades and the like. Then, for example, ice might drop to affect the wind turbine part located on the lower level.

Therefore, it is an object of the present invention to provide a wind turbine generator including a plurality of wind turbine parts and a control method for the wind turbine generator, capable of reducing an influence at the time of icing on the wind turbine generator.

A first aspect of the present invention is a wind turbine generator provided with: a tower part; a plurality of wind turbine parts each including a rotor, blades provided on the rotor, and a power generator that generates power by a rotational force of the rotor; and a support member that is connected to the tower part and supports the plurality of wind turbine parts, at least one of the plurality of wind turbine parts being different in placement height from the other wind turbine parts. The wind turbine generator includes an environment determination means that determines whether an operation environment is a cold environment in which icing may occur, and when the environment determination means determines that the operation environment is the cold environment in which icing may occur, the plurality of wind turbine parts are moved to positions at which vertical projection images of the plurality of wind turbine parts on a horizontal plane do not overlap.

With the configuration as thus described, the upper-level wind turbine part and the lower-level wind turbine part are arranged at positions where the wind turbine parts do not overlap, so that it is possible to reduce an influence of ice dropped from the upper-level wind turbine part, on the lower-level wind turbine part.

In the above wind turbine generator, the plurality of wind turbine parts may include at least two wind turbine parts having the same placement heights, the wind turbine generator may include a yaw turning part that causes the wind turbine parts having the same placement heights to simultaneously make yaw turning about the tower part as a shaft, and when the environment determination means determines that the operation environment is the cold environment in which icing may occur, the plurality of wind turbine parts may be moved by driving the yaw turning part.

With the configuration as described above, driving the yaw turning part enables efficient positional movement of the plurality of wind turbine parts.

In the above wind turbine generator, the environment determination means may determine whether the operation environment of the wind turbine generator is the cold environment when operation is stopped.

With the configuration as thus described, it is possible to reduce an influence of ice dropped from the upper-level wind turbine part, on the lower-level wind turbine part after the operation has been stopped.

In the above wind turbine generator, the environment determination means may determine whether the operation environment of the wind turbine generator is the cold environment when operation is started.

With the configuration as thus described, it is possible to reduce an influence of ice dropped from the upper-level wind turbine part, on the lower-level wind turbine part after the operation has been started.

In the above wind turbine generator, the environment determination means may determine whether the operation environment is the cold environment on the basis of a detection result of at least any of a temperature detection means, a humidity detection means, a precipitation detection means, and an ice detection means.

With the configuration as described above, it is possible to accurately determine whether or not the operation environment is the cold environment.

In the above wind turbine generator, the blades provided on the rotor may be made up of three blades radially arranged around a rotational shaft line of the rotor, and when the environment determination means determines that the operation environment is the cold environment, the wind turbine generator may be stopped in a state where one of the three blades is located at the lowermost position (an azimuth angle of 180 degrees).

With the configuration as described above, it is possible to reduce the possibility that ice, which is dropped from each of the other two blades not located at the lowermost position, collides with, for example, a nacelle that accommodates the power generator.

A second aspect of the present invention is a control method for a wind turbine generator including a tower part; a plurality of wind turbine parts each having a rotor, blades provided on the rotor, and a power generator that generates power by a rotational force of the rotor; and a support member that is connected to the tower part and supports the plurality of wind turbine parts, at least one of the plurality of wind turbine parts being different in placement height from the other wind turbine parts. The control method includes: an environment determination step of determining whether an operation environment is a cold environment in which icing may occur; and a movement step of moving the plurality of wind turbine parts to positions at which vertical projection images of the plurality of wind turbine parts on a horizontal plane do not overlap, when it is determined by the environment determination step that the operation environment is the cold environment in which icing may occur.

According to the present invention, there is produced an effect of being able to reduce an influence at the time of icing on a wind turbine generator provided with a plurality of wind turbine parts.

### BRIEF DESCRIPTION OF THE SEVERAL VIEWS OF THE DRAWINGS

FIG. 1 is a view showing a schematic configuration of a wind turbine generator according to one embodiment of the present invention;
FIG. 2 is a block diagram showing a function provided in the wind turbine generator according to one embodiment of the present invention;
FIG. 3 is a diagram showing a flowchart of operation stop processing in the wind turbine generator according to one embodiment of the present invention; and
FIG. 4 is a view showing the positional relationship of wind turbine parts at the time of stopping the operation in the wind turbine generator according to one embodiment of the present invention.

### DETAILED DESCRIPTION OF THE INVENTION

Hereinafter, one embodiment of a wind turbine generator according to the present invention and a control method for the wind turbine generator will be described with reference to the drawings.

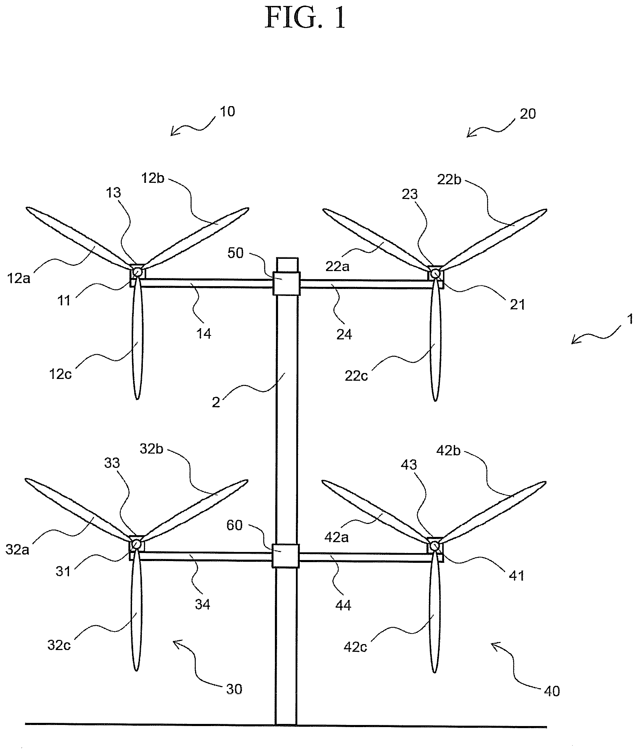

FIG. 1 is a view showing a schematic configuration of a wind turbine generator 1 according to an embodiment of the present invention. As shown in FIG. 1, in the wind turbine generator 1 according to the present embodiment, four wind turbine parts 10, 20, 30, 40 are supported by a tower part 2 via support members 14, 24, 34, 44 and yaw turning parts 50, 60, respectively. The tower part 2 has a structure being long in one direction, and a foundation part of the tower part 2 is provided on an installation plane such that the axial direction of the tower part 2 is vertical to the installation plane. The tower part 2 may, for example, be made up of one columnar member or may be made up of a plurality of elongated members in combination.

The support members 14, 24, 34, 44 are, for example, members being long in one direction. Base parts being one end sides of the support members 14, 24, 34, 44 are connected to the tower part 2, and the tip sides being the other end sides of the support members 14, 24, 34, 44 support the wind turbine parts 10, 20, 30, 40. Each of the support members 14, 24, 34, 44 may be an elongated member having a columnar shape or the like, or may be a member having a truss structure formed of a plurality of members in combination.

The wind turbine part 10 includes a rotor 11, three blades 12a to 12c, a nacelle 13, and the like. The three blades 12a to 12c are radially attached to the rotor 11 around its rotational shaft line. The rotor 11 is rotatable around an almost horizontal shaft line. The force of the wind having blown from the direction of the rotational shaft line of the rotor 11 against the blades 12a to 12c is converted into motive power that rotates the rotor 11 around the rotational shaft line, and this motive power is converted into electric energy by the power generator provided in the nacelle 13.

The rotation of the rotor 11 can be stopped by a brake device provided in the nacelle 13. Further, by controlling the brake device, the rotor 11 can be stopped at a set azimuth angle. The azimuth angle is an angle formed by a predetermined reference and a shaft line of each of the blades 12a to 12c on the rotational plane of each of the blades 12a to 12c, and in the present embodiment, the reference is set at the time when the blade 12a is located at the uppermost position. The azimuth angle at the time when the blade 12a is located at the uppermost position of the wind turbine is 0 degree, and an azimuth angle at the time when the blade 12a is located at the lowermost position is 180 degrees. Each of the blades 12a to 12c is connected to the rotor 11 via a revolution ring bearing for pitch control (pitch bearing), and is turnable around a blade shaft line extending in the direction of the blade length. A pitch angle of each of the blades 12a to 12c is thereby adjusted.

The nacelle 13 is installed on the top or bottom of the support member 14 and revolves on the substantially horizontal plane with respect to the support member 14 so as to orient the rotor 11 to the wind direction and make the rotation plane of each of the blades 12a to 12c face the wind direction. The turning of the nacelle 13 on the substantially horizontal plane is referred to as yaw turning.

The cover of the nacelle 13 accommodating equipment such as the power generator is made of, for example, fiber reinforced plastics (FRP) or the like. Note that the wind turbine parts 20, 30, 40 are configured in the same manner as the wind turbine part 10.

The yaw turning parts 50, 60 include yaw bearings and yaw motors, the bearings making the support members 14, 24, 34, 44 revolvable with respect to the tower part 2. The yaw bearing is made up of, for example, a rolling bearing or a sliding bearing.

In the wind turbine generator 1, the wind turbine part 10 and the wind turbine part 20 are arranged on an upper level, and the wind turbine part 30 and the wind turbine part 40 are arranged on a lower level. The upper-level wind turbine part 10 is connected to the yaw turning part 50 via the support part 14, and the upper-level wind turbine part 20 is connected to the yaw turning part 50 via the support part 24. In the same manner as above, the lower-level wind turbine part 30 is connected to the yaw turning part 60 via the support part 34, and the lower-level wind turbine part 40 is connected to the yaw turning part 60 via the support part 44. Thus, driving the yaw turning part 50 enables the yaw turning of the upper-level wind turbine part 10 and wind turbine part 20 about the tower part 2 as a shaft. In the same manner, driving the yaw turning part 60 enables the yaw turning of the lower-level wind turbine part 30 and wind turbine part 40 about the tower part 2 as the shaft.

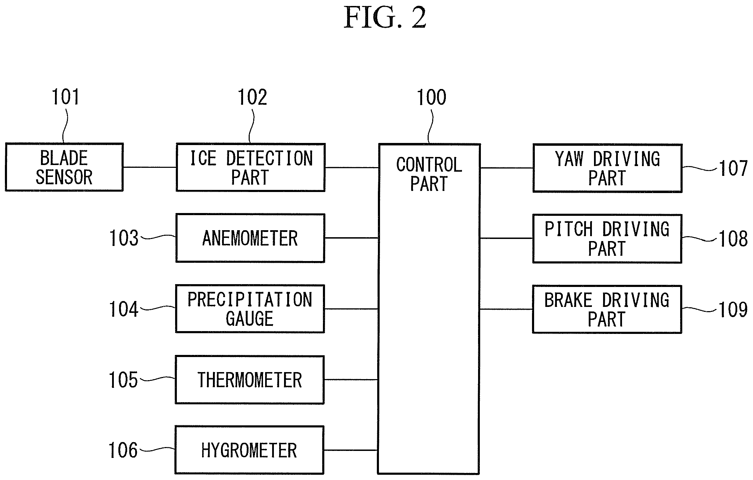

FIG. 2 is a block diagram showing a function provided in the wind turbine generator 1 according to one embodiment of the present invention. A control system of the wind turbine generator 1 according to the present embodiment includes a control part 100, a blade sensor 101, an ice detection part 102, an anemometer 103, a precipitation gauge 104, a thermometer 105, a hygrometer 106, a yaw driving part 107, a pitch driving part 108, and a brake driving part 109.

The control part 100 is made up of a central processing unit (CPU), a random access memory (RAM), a computer readable recording medium, and the like. A process of a series of processing for achieving a variety of functions described later has been recorded in the form of a program in the recording medium or the like. The CPU reads out this program into the RAM or the like to execute information processing and computing, thereby achieving the variety of functions described later.

The blade sensor 101 is a sensor for detecting states of blades 12a to 12c, 22a to 22c, 32a to 32c, 42a to 42c and is made up of a strain sensor, for example. The ice detection part 102 detects icing amounts of the blades 12a to 12c, 22a to 22c, 32a to 32c, 42a to 42c on the basis of outputs of the blade sensor 101, and the like.

The anemometer 103 detects main wind directions with respect to directions of the rotors 11, 21, 31, 41 and wind speeds on the rotors 11, 21, 31, 41 or nacelles 13, 23, 33, 43.

The precipitation gauge 104 detects a precipitation amount in the wind turbine generator 1.

The thermometer 105 detects an ambient temperature in the wind turbine generator 1.

The hygrometer 106 detects a humidity in the wind turbine generator 1.

The yaw driving part 107 is configured so as to control the yaw turning parts 50, 60. The pitch driving part 108 is configured so as to control pitch angles of the blades 12a to 12c, 22a to 22c, 32a to 32c, 42a to 42c.

The brake driving part 109 is configured so as to control a brake device for stopping/fixing the rotation of each of the rotors 11, 21, 31, 41. The brake driving part 109 can control the azimuth angles at the time when the rotation of each of the rotors 11, 21, 31, 41 is stopped.

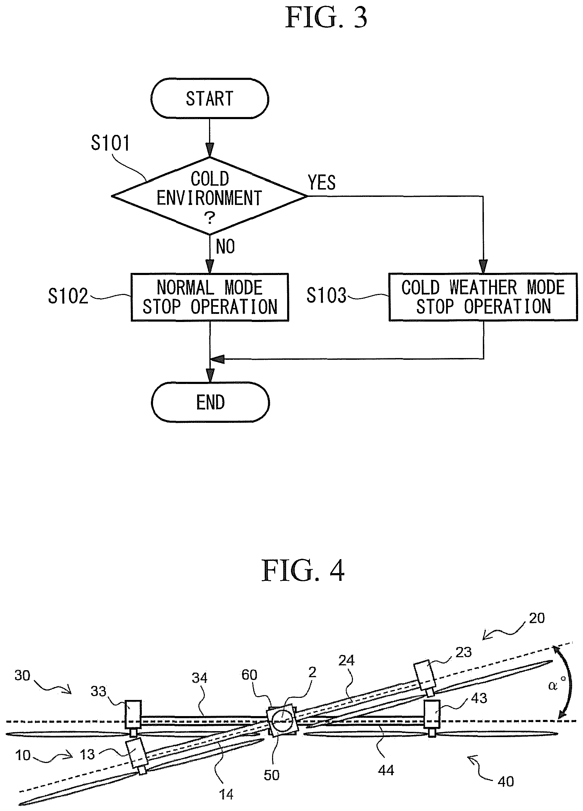

Next, the processing at the time of stopping the operation, which is executed in the control system of the wind turbine generator 1 according to the present embodiment, will be described with reference to FIG. 3. The flow shown in FIG. 3 is executed each time a command to stop the operation is issued to the wind turbine generator 1.

First, the wind turbine generator 1 determines whether or not the operation environment of the wind turbine generator 1 is a cold environment in which icing may occur (S101). Specifically, it is determined whether or not predetermined cold environment conditions are satisfied.

As the cold environment conditions, for example, there are conditions as follows. These conditions may be set singly or may be set in combination.
- A case where icing on the wind turbine generator 1 is detected by the ice detection part 102.
- A case where a cold weather mode is preset in the wind turbine generator 1.
- A case where a temperature equal to or lower than a predetermined value (e.g., 5°C) is detected by the thermometer 106.
- A case where a humidity equal to or higher than a predetermined value (e.g., 60%) is detected by the hygrometer 105.
- A case where a precipitation amount equal to or higher than a predetermined value (e.g., 50 mm/day) is detected by the precipitation gauge 104.
- A case where a humidity equal to or higher than a predetermined value (e.g., 60%) is detected by the hygrometer 106, and a temperature equal to or lower than a predetermined value (e.g., 5°C) is detected by the thermometer 105.
- A case where a precipitation amount equal to or higher than a predetermined value (e.g., 50 mm/day) is detected by the precipitation gauge 104, and a temperature equal to or lower than a predetermined value (e.g., 5°C) is detected by the thermometer 105.

When it is determined that the operation environment of the wind turbine generator 1 is not the cold environment (NO in step S101), the operation of the wind turbine generator 1 is stopped in accordance with operation stop processing in a normal mode (S102), to complete the processing. Specifically, the control part 100 causes the pitch driving part 108 to control the pitch angle of each of the blades 12a to 12c, 22a to 22c, 32a to 32c, 42a to 42c of the wind turbine parts 10, 20, 30, 40, the operation of which is to be stopped, to the feather side and stops the wind turbine generator 1. By controlling the pitch angle to the feather side, an aerodynamic braking force is added to each of the rotors 11, 21, 31, 41 to decrease a rotational speed. At the point when the rotational speed of each of the rotors 11, 21, 31, 41 sufficiently decreases, the rotation is completely stopped by the brake driving part 109. In the operation stop processing in the normal mode, the control is not performed by the yaw driving part 107.

Meanwhile, when it is determined that the operation environment of the wind turbine generator 1 is the cold environment (YES in step S101), the operation of the wind turbine generator 1 is stopped in accordance with operation stop processing in a cold weather mode (S103), to complete the processing.

Specifically, first, in the same manner as in the operation stop processing in the normal mode, the pitch angle of each of the blades 12a to 12c, 22a to 22c, 32a to 32c, 42a to 42c is controlled to the feather side by the pitch driving part 108 to decrease the rotational speed of each of the rotors 11, 21, 31, 41, whereafter the rotation is completely stopped by the brake driving part 109.

Further, in the cold weather mode, the yaw turning parts 50, 60 are controlled by the yaw driving part 107, and as shown in FIG. 4, the wind turbine parts 10, 20, 30, 40 are moved such that vertical projection images of the upper-level wind turbine parts 10, 20 and the lower-level wind turbine parts 30, 40 on the horizontal plane do not overlap. As an example, the angles of the upper-level yaw turning part 50 and the lower-level yaw turning part 60 are set so as to be displaced from each other by α°. Note that the displacement amount of α° between the upper-level yaw angle and the lower-level yaw angle can be set in a freely selectable manner in a range where the vertical projection images of the upper-level wind turbine parts 10, 20 and the lower-level wind turbine parts 30, 40 on the horizontal plane do not overlap.

Moving the wind turbine parts 10, 20, 30, 40 to such positions can lead to reduction in possibility that ice dropped from the upper-level wind turbine parts 10, 20 collides with the lower-level wind turbine parts 30, 40.

In the operation stop processing in the cold weather mode, for example as shown in FIG. 1, the brake driving part 109 may be controlled such that the azimuth angle of each of the blades 12c, 22c, 32c, 42c at the time of stoppage is 180 degrees, namely, such that the blades 12c, 22c, 32c, 42c are located at the lowermost positions. By arranging the blades 12a to 12c, 22a to 22c, 32a to 32c, 42a to 42c at the time of stoppage into a Y shape as thus described, it is possible to reduce the possibility that ice dropped from the blades 12a to 12c, 22a to 22c, 32a to 32c, 42a to 42c collides with the nacelles 13, 23, 33, 43.

Alternatively, the determination processing of determining that the operation environment of the wind turbine generator 1, which is executed in the control system of the wind turbine generator 1 according to the present embodiment described above, is the cold environment may be executed at the time of starting the operation of the wind turbine generator 1. Specifically, it is determined whether or not the operation environment of the wind turbine generator 1 is the cold environment in which icing may occur at the time of starting the operation which is executed in the control system of the wind turbine generator 1 according to the present embodiment. When the operation environment of the wind turbine generator 1 is determined to be the cold environment, the wind turbine parts 10, 20, 30, 40 may be moved to positions at which the vertical projection images of the upper-level wind turbine parts 10, 20 and the lower-level wind turbine parts 30, 40 on the horizontal plane do not overlap, and thereafter, the normal operation start processing (activation processing) may be performed.

Moving the wind turbine parts 10, 20, 30, 40 to such positions at the time of starting the operation enables reduction in possibility that after the operation is started the ice dropped from the upper-level wind turbine parts 10, 20 collides with the lower-level wind turbine parts 30, 40.

Alternatively, in a wind farm (wind turbine generation system) provided with a plurality of wind turbine generators, at least one wind turbine generator may be provided with the function of determining whether or not the operation environment is the cold environment in which icing may occur. When the wind turbine generator is determined to be the cold environment, in every wind turbine generator, the wind turbine parts may be moved to positions at which the vertical projection images of the upper-level wind turbine part and the lower-level wind turbine part on the horizontal plane do not overlap.

### REFERENCE SIGNS LIST

1 wind turbine generator
2 tower part
10, 20, 30, 40 wind turbine part
11, 21, 31, 41 rotor
12a to 12c, 22a to 22c, 32a to 32c, 42a to 42c blade
13, 23, 33, 43 nacelle
14, 24, 34, 44 support member
50, 60 yaw turning part
100 control part
101 blade sensor
102 ice detection part
103 anemometer
104 precipitation gauge
105 thermometer
106 hygrometer
107 yaw driving part
108 pitch driving part
109 brake driving part

## Claims

1. A wind turbine generator (1)comprising:
a tower part (2) ;
a plurality of wind turbine parts (10, 20, 30, 40) each including a rotor (11, 21, 31, 41), blades (12a-12c, 22a-22c, 32a-32c, 42a-42c) provided on the rotor, and a power generator that generates power by a rotational force of the rotor; and
a support member (14, 24, 34, 44) that is connected to the tower part and supports the plurality of wind turbine parts,
at least one of the plurality of wind turbine parts (10, 20, 30, 40) being different in placement height from the other wind turbine parts,
the wind turbine generator (1) **characterized in that** it comprises an environment determination means (100, 102, 104, 105, 106) that determines whether an operation environment is a cold environment in which icing may occur, and
when the environment determination means (100, 102, 104, 105, 106) determines that the operation environment is the cold environment, the plurality of wind turbine parts (10, 20, 30, 40) are moved to positions at which vertical projection images of the plurality of wind turbine parts on a horizontal plane do not overlap.

2. The wind turbine generator according to claim 1, wherein
the plurality of wind turbine parts include at least two wind turbine parts (10, 20; 30, 40) having the same placement heights,
the wind turbine generator comprises a yaw turning part (50, 60) that causes the wind turbine parts having the same placement heights to simultaneously make yaw turning about the tower part (2) as a shaft, and
when the environment determination means (100, 102, 104, 105, 106) determines that the operation environment is the cold environment, the plurality of wind turbine parts are moved by driving the yaw turning part (50, 60).

3. The wind turbine generator according to claim 1 or 2, wherein the environment determination means (100, 102, 104, 105, 106) determines whether the operation environment is the cold environment on a basis of a detection result of at least any of a temperature detection means (105), a humidity detection means (106), a precipitation detection means (104), and an ice detection means (102).

4. The wind turbine generator according to any one of claims 1 to 3, wherein the environment determination means (100, 102, 104, 105, 106) determines whether the operation environment of the wind turbine generator is the cold environment when operation is stopped.

5. The wind turbine generator according to any one of claims 1 to 3, wherein the environment determination means (100, 102, 104, 105, 106) determines whether the operation environment of the wind turbine generator is the cold environment when operation is started.

6. The wind turbine generator according to any one of claims 1 to 4, wherein
the blades (12a-12c, 22a-22c, 32a-32c, 42a-42c) provided on the rotor (11, 21, 31, 41) are made up of three blades radially arranged around a rotational shaft line of the rotor, and
when the environment determination means (100, 102, 104, 105, 106) determines that the operation environment is the cold environment, the wind turbine generator is stopped in a state where one of the three blades is located at the lowermost position.

7. A control method for a wind turbine generator (1) including a tower part (2); a plurality of wind turbine parts (10, 20, 30, 40) each having a rotor (11, 21, 31, 41), blades (12a-12c, 22a-22c, 32a-32c, 42a-42c) provided on the rotor, and a power generator that generates power by a rotational force of the rotor; and a support member (14, 24, 34, 44) that is connected to the tower part and supports the plurality of wind turbine parts, at least one of the plurality of wind turbine parts (10, 20, 30, 40) being different in placement height from the other wind turbine parts, the method **characterized by** comprising:
an environment determination step of determining whether an operation environment is a cold environment in which icing may occur; and
a movement step of moving the plurality of wind turbine parts to positions at which vertical projection images of the plurality of wind turbine parts (10, 20, 30, 40) on a horizontal plane do not overlap, when it is determined by the environment determination step that the operation environment is the cold environment.

8. A wind turbine generation system provided with a plurality of wind turbine generators (1) each including a plurality of wind turbine parts (10, 20, 30, 40), wherein
at least one of the plurality of wind turbine generators is the wind turbine generator according to any one of claims 1 to 6, and
when the environment determination means (100, 102, 104, 105, 106) determines that the operation environment is the cold environment, the plurality of wind turbine parts are moved to positions at which vertical projection images of the plurality of wind turbine parts on a horizontal plane do not overlap.

## Patentansprüche

1. Windturbinengenerator (1), der Folgendes umfasst:
ein Mastteil (2);
eine Vielzahl von Windturbinenteilen (10, 20, 30, 40), von denen jedes einen Rotor (11, 21, 31, 41), Blätter (12a-12c, 22a-22c, 32a-32c, 42a-42c), die am Rotor bereitgestellt sind, und einen Stromgenerator, der durch eine Rotationskraft des Rotors Strom erzeugt, beinhaltet; und
ein Stützelement (14, 24, 34, 44), das mit dem Mastteil verbunden ist und die Vielzahl von Windturbinenteilen stützt,
wobei sich mindestens eines der Vielzahl von Windturbinenteilen (10, 20, 30, 40) hinsichtlich einer Platzierungshöhe von den anderen Windturbinenteilen unterscheidet,
wobei der Windturbinengenerator (1) **dadurch gekennzeichnet ist, dass** er Umgebungsbestimmungsmittel (100, 102, 104, 105, 106) umfasst, die bestimmen, ob eine Betriebsumgebung eine kalte Umgebung ist, in der eine Vereisung auftreten kann, und
wenn die Umgebungsbestimmungsmittel (100, 102, 104, 105, 106) bestimmen, dass die Betriebsumgebung die kalte Umgebung ist, werden die Vielzahl von Windturbinenteilen (10, 20, 30, 40) zu Positionen bewegt, in denen sich vertikale Projektionsbilder der Vielzahl von Windturbinenteilen auf einer horizontalen Ebene nicht überlappen.

2. Windturbinengenerator nach Anspruch 1, wobei
die Vielzahl von Windturbinenteilen mindestens zwei Windturbinenteile (10, 20; 30, 40) mit denselben Platzierungshöhen beinhalten,
der Windturbinengenerator ein Gierdrehteil (50, 60) umfasst, das bewirkt, dass die Windturbinenteile mit denselben Platzierungshöhen gleichzeitig eine Gierdrehung um das Mastteil (2) als eine Welle vornehmen, und
wenn die Umgebungsbestimmungsmittel (100, 102, 104, 105, 106) bestimmen, dass die Betriebsumgebung die kalte Umgebung ist, die Vielzahl von Windturbinenteilen durch Antreiben des Gierdrehteils (50, 60) bewegt werden.

3. Windturbinengenerator nach Anspruch 1 oder 2, wobei die Umgebungsbestimmungsmittel (100, 102, 104, 105, 106) auf Basis eines Detektionsergebnisses von mindestens einem eines Temperaturdetektionsmittels (105), eines Feuchtigkeitsdetektionsmittels (106), eines Niederschlagsdetektionsmittels (104) und eines Eisdetektionsmittels (102) bestimmen, ob die Betriebsumgebung die kalte Umgebung ist.

4. Windturbinengenerator nach einem der Ansprüche 1 bis 3, wobei die Umgebungsbestimmungsmittel (100, 102, 104, 105, 106) bestimmen, ob die Betriebsumgebung des Windturbinengenerators die kalte Umgebung ist, wenn der Betrieb gestoppt wird.

5. Windturbinengenerator nach einem der Ansprüche 1 bis 3, wobei die Umgebungsbestimmungsmittel (100, 102, 104, 105, 106) bestimmen, ob die Betriebsumgebung des Windturbinengenerators die kalte Umgebung ist, wenn der Betrieb gestartet wird.

6. Windturbinengenerator nach einem der Ansprüche 1 bis 4, wobei
die Blätter (12a-12c, 22a-22c, 32a-32c, 42a-42c), die am Rotor (11, 21, 31, 41) bereitgestellt sind, aus drei Blättern bestehen, die radial um eine Rotationswellenlinie des Rotors angeordnet sind, und
wenn die Umgebungsbestimmungsmittel (100, 102, 104, 105, 106) bestimmen, dass die Betriebsumgebung die kalte Umgebung ist, der Windturbinengenerator in einem Zustand, in dem sich eines der drei Blätter in der niedrigsten Position befindet, gestoppt wird.

7. Steuerverfahren für einen Windturbinengenerator (1), der einen Mastteil (2); eine Vielzahl von Windturbinenteilen (10, 20, 30, 40), von denen jedes einen Rotor (11, 21, 31, 41), Blätter (12a-12c, 22a-22c, 32a-32c, 42a-42c), die am Rotor bereitgestellt sind, und einen Stromgenerator, der durch eine Rotationskraft des Rotors Strom erzeugt, aufweist; und ein Stützelement (14, 24, 34, 44), das mit dem Mastteil verbunden ist und die Vielzahl von Windturbinenteilen stützt, beinhaltet, wobei sich mindestens eines der Vielzahl von Windturbinenteilen (10, 20, 30, 40) hinsichtlich einer Platzierungshöhe von den anderen Windturbinenteilen unterscheidet, wobei das Verfahren **dadurch gekennzeichnet ist, dass** es Folgendes umfasst:
einen Umgebungsbestimmungsschritt zum Bestimmen, ob eine Betriebsumgebung eine kalte Umgebung ist, in der eine Vereisung auftreten kann; und
einen Bewegungsschritt zum Bewegen der Vielzahl von Windturbinenteilen zu Positionen, in denen sich vertikale Projektionsbilder der Vielzahl von Windturbinenteilen (10, 20, 30, 40) auf einer horizontalen Ebene nicht überlappen, wenn im Umgebungsbestimmungsschritt bestimmt wird, dass die Betriebsumgebung die kalte Umgebung ist.

8. Windturbinenerzeugungssystem, das mit einer Vielzahl von Windturbinengeneratoren (1) ausgerüstet ist, von denen jeder eine Vielzahl von Windturbinenteilen (10, 20, 30, 40) beinhaltet, wobei
mindestens einer der Vielzahl von Windturbinengeneratoren der Windturbinengenerator nach einem der Ansprüche 1 bis 6 ist, und
wenn die Umgebungsbestimmungsmittel (100, 102, 104, 105, 106) bestimmen, dass die Betriebsumgebung die kalte Umgebung ist, die Vielzahl von Windturbinenteilen zu Positionen bewegt werden, in denen sich vertikale Projektionsbilder der Vielzahl von Windturbinenteilen auf einer horizontalen Ebene nicht überlappen.

## Revendications

1. Générateur d'éolienne (1) comprenant :
une tour (2) ;
une pluralité de parties d'éolienne (10, 20, 30, 40) comportant chacune un rotor (11, 21, 31, 41), des pales (12a-12c, 22a-22c, 32a-32c, 42a-42c) prévues sur le rotor, et un générateur d'énergie électrique qui génère de l'énergie électrique par une force rotationnelle du rotor ; et
un élément de support (14, 24, 34, 44) qui est relié à la tour et supporte la pluralité de parties d'éolienne,
au moins une de la pluralité de parties d'éolienne (10, 20, 30, 40) étant différente en hauteur de placement des autres parties d'éolienne,
le générateur d'éolienne (1) étant **caractérisé en ce qu'**il comprend un moyen de détermination d'environnement (100, 102, 104, 105, 106) qui détermine si un environnement de fonctionnement est un environnement froid dans lequel un givrage peut se produire, et
lorsque le moyen de détermination d'environnement (100, 102, 104, 105, 106) détermine que l'environnement de fonctionnement est l'environnement froid, la pluralité de parties d'éolienne (10, 20, 30, 40) sont déplacées vers des positions au niveau desquelles des images de projection verticale de la pluralité de parties d'éolienne sur un plan horizontal ne se chevauchent pas.

2. Générateur d'éolienne selon la revendication 1, dans lequel
la pluralité de parties d'éolienne comportent au moins deux parties d'éolienne (10, 20 ; 30, 40) présentant les mêmes hauteurs de placement,
le générateur d'éolienne comprend une partie de rotation en lacet (50, 60) qui amène les parties d'éolienne présentant les mêmes hauteurs de placement à réaliser simultanément une rotation en lacet autour de la tour (2) en tant qu'arbre, et
lorsque le moyen de détermination d'environnement (100, 102, 104, 105, 106) détermine que l'environnement de fonctionnement est l'environnement froid, la pluralité de parties d'éolienne sont déplacées par entraînement de la partie de rotation en lacet (50, 60).

3. Générateur d'éolienne selon la revendication 1 ou 2, dans lequel le moyen de détermination d'environnement (100, 102, 104, 105, 106) détermine si l'environnement de fonctionnement est l'environnement froid sur la base d'un résultat de détection d'au moins l'un quelconque d'un moyen de détection de température (105), d'un moyen de détection d'humidité (106), d'un moyen de détection de précipitation (104), et d'un moyen de détection de glace (102).

4. Générateur d'éolienne selon l'une quelconque des revendications 1 à 3, dans lequel le moyen de détermination d'environnement (100, 102, 104, 105, 106) détermine si l'environnement de fonctionnement du générateur d'éolienne est l'environnement froid lorsque le fonctionnement est arrêté.

5. Générateur d'éolienne selon l'une quelconque des revendications 1 à 3, dans lequel le moyen de détermination d'environnement (100, 102, 104, 105, 106) détermine si l'environnement de fonctionnement du générateur d'éolienne est l'environnement froid lorsque l'opération est démarrée.

6. Générateur d'éolienne selon l'une quelconque des revendications 1 à 4, dans lequel
les pales (12a-12c, 22a-22c, 32a-32c, 42a-42c) prévues sur le rotor (11, 21, 31, 41) sont composées de trois pales agencées radialement autour d'une ligne d'arbre rotationnel du rotor, et
lorsque le moyen de détermination d'environnement (100, 102, 104, 105, 106) détermine que l'environnement de fonctionnement est l'environnement froid, le générateur d'éolienne est arrêté dans un état dans lequel une des trois pales est située au niveau de la position la plus basse.

7. Procédé de commande pour un générateur d'éolienne (1) comportant une tour (2) ; une pluralité de parties d'éolienne (10, 20, 30, 40) présentant chacune un rotor (11, 21, 31, 41), des pales (12a-12c, 22a-22c, 32a-32c, 42a-42c) prévues sur le rotor, et un générateur d'énergie électrique qui génère de l'énergie électrique par une force rotationnelle du rotor ; et un élément de support (14, 24, 34, 44) qui est relié à la tour et supporte la pluralité de parties d'éolienne, au moins une de la pluralité de parties d'éolienne (10, 20, 30, 40) étant différente en hauteur de placement des autres parties d'éolienne, le procédé étant **caractérisé en ce qu'**il comprend :
une étape de détermination d'environnement consistant à déterminer si un environnement de fonctionnement est un environnement froid dans lequel un givrage peut se produire ; et
une étape de déplacement consistant à déplacer la pluralité de parties d'éolienne vers des positions au niveau desquelles des images de projection verticale de la pluralité de parties d'éolienne (10, 20, 30, 40) sur un plan horizontal ne se chevauchent pas, lorsqu'il est déterminé par l'étape de détermination d'environnement que l'environnement de fonctionnement est l'environnement froid.

8. Système de génération d'éolienne pourvu d'une pluralité de générateurs d'éolienne (1) comportant chacun une pluralité de parties d'éolienne (10, 20, 30, 40), dans lequel
au moins un de la pluralité de générateurs d'éolienne est le générateur d'éolienne selon l'une quelconque des revendications 1 à 6, et
lorsque le moyen de détermination d'environnement (100, 102, 104, 105, 106) détermine que l'environnement de fonctionnement est l'environnement froid, la pluralité de parties d'éolienne sont déplacées vers des positions au niveau desquelles des images de projection verticale de la pluralité de parties d'éolienne sur un plan horizontal ne se chevauchent pas.
